Europäisches Patentamt

European Patent Office

Office européen des brevets

(19)

(11) Publication number: **0 055 757**
**B1**

# EUROPEAN PATENT SPECIFICATION

(45) Date of publication of patent specification: **20.11.86**

(21) Application number: **81902053.8**

(22) Date of filing: **30.06.81**

(88) International application number:
**PCT/HU81/00026**

(87) International publication number:
**WO 82/00258 04.02.82 Gazette 82/04**

(51) Int. Cl.⁴: **B 01 J 19/00, B 01 F 7/00,
B 01 D 33/00, B 01 D 29/02**

(54) **MULTI-PURPOSE CHEMICAL INDUSTRIAL APPARATUS.**

(30) Priority: **11.07.80 HU 174580**

(43) Date of publication of application:
**14.07.82 Bulletin 82/28**

(45) Publication of the grant of the patent:
**20.11.86 Bulletin 86/47**

(84) Designated Contracting States:
**AT CH DE FR GB LI NL SE**

(56) References cited:
**FR-A-2 209 609
FR-A-2 284 363
US-A-1 880 816
US-A-2 213 907
US-A-4 105 550**

**Y.A.Golovachevsky "orositeli i forsunki
skrubberov khimicheskoi promyshlennosti",
publ. 1974, Publishing House
"Mashinostroenie"(Moscow), pages 188-189**

(73) Proprietor: **EGYT GYOGYSZERVEGYESZETI
GYAR
Keresztur u. 30-38 P.O. Box 100
H-1106 Budapest (HU)**

(72) Inventor: **KOCZKA, Sándor
Fazekas u. 10
H-1027 Budapest (HU)**
Inventor: **DOMJAN, Szilveszter
Dombtetö u. 16
H-1108 Budapest (HU)**

(74) Representative: **Bardehle, Heinz, Dipl.-Ing. et al
Patent- und Rechtsanwälte Bardehle-
Pagenberg-Dost-Altenburg & Partner
Postfach 86 06 20
D-8000 München 86 (DE)**

(56) References cited:
**Y.A.Golovachevsky "Orositeli i forsunki
skrubberov khimicheskoi promyshlennosti",
publ. 1974, Publishing House
"Mashinostroenie"(Moscow), pages 167-168**

Courier Press, Leamington Spa, England.

**0 055 757**

(56) References cited:

**G.A.Akselrud, A.D. Molchanov "Gazozhidkostnye reaktory", publ. 1974, Publishing House "Khimiya" (Moscow), pages 190-191**

**V.N.Sokolov, I.V. Domansky "Gazozhidkostnye reaktory", publ. 1976, Publishing House "Mashinostroenie", page 12**

**A.N.Planovsky "Spetsialnaya apparatura promyshlennosti organicheskikh poluproduktov i krasitelei", publ. 1940, Publishing House "Goskhimizdat"(Moscow), page 353**

**Y.I.Makarov, A.E. Genkin "Tekhnologicheskoe oborudovanie khimicheskikh i neftepererabaty vajuschikh zavodov", publ. 1976, Publishing House "Mashinostroenie" (Moscow), page 252**

**Y.I.Makarov, A.E. Genkin "Tekhnologicheskoe oborudovanie khimicheskikh i neftepererabatyvajuschikh zavodov", publ. 1976, Publishing House "Mashinostroenie"(Moscow), page 252**

## Description

The invention relates to multi-purpose chemical industrial apparatus, particularly for different processes of the pharmaceutical technologies. It is preferably a double-walled basic apparatus assembled from a cup and from the adjoining openable dome cover. The basic apparatus has one or several intake stub(s) arranged on the dome cover for admission of the material to be processed, an outlet stub arranged on the cup for discharge of the material and in given case devices suitable for varying the temperature of the material.

Certain process combined with filtering is a frequent task in the chemical, especially in the pharmaceutical technologies.

For this reason most of the known multi-purpose apparatuses are suitable for incorporating some kind of filter material or filter device. Such mixing device also exists, where the lower part has a filter material through which the liquid passes, while the filtered solid particles remain on the top of the filter material. The filtered, so-called "cake" is loosened by the mixer units of the machine and possibly dried with the heatable jacket of the apparatus.

There are such multi-purpose apparatuses at which the drying is accelerated with vacuum. These apparatuses can be equally used for "cake" filtering, drying, reaction and for heat transfer facilitating the efficiency. Deficiency of such apparatuses is represented by having small filtering surface, thus they can not be used for separation of suspensions with large solid substance content, or for filtering viscous materials. Further development of the known apparatuses was aimed at such apparatus, which has larger filter surface. Further objective was the mechanization and automation of the part-processes.

As a result of the mentioned efforts, such technical solution was brought about, which is described in DD—110 776. The apparatus has a vertical driving shaft, its filter elements are similarly vertically arranged and rotated around the shaft. The apparatus is used first of all for purification by filtering. However mounting and dismounting of the filter insert are difficult, which means that the apparatus is not suitable for other process.

The liquid filter described in CH—468 842 is built up according to a different principle. This has candle-shaped filter elements, which are rotated with a shaft, thus their surface can be cleaned. Use of the candles results in complicated structural build-up. The rotating mechanism composed of several parts and connected in a complicated way excludes the possibility of exchanging the filter inserts with other technological units suitable for carrying out other processes.

CH—487 664 describes an apparatus having rotatable filter bags. The filter bags are fixed on a tubular shaft with the aid of which they are rotated. The solution is ingenious, because the tubular shaft is also suitable for conveyance of the filtrate. However the structural build-up is sensitive and complicated, for this reason the filter inserts can not be quickly and simply removed, whereby the apparatus is not suitable for other, than filtering process.

With further development of the known basic idea an apparatus was brought about described in HU—160 608. The apparatus is formed by a horizontal cylindrical jacket with circular segment-shaped vertical filter bags arranged in the interior. Sludge flushing tube passes through in the centre of the filter plates along the centreline of the cylinder, which performs axial and concentric motion. The water flowing through the nozzles cleans the filter bags. Unfortunately the horizontal arrangement of the apparatus and its complicated rotating mechanism do not allow simple conversion and multi-purpose usage.

In the vertically arranged housing of the apparatus described in DE—1 461 400, circular filter elements are built in. It has a flushing unit, but this is vertically arranged and the filters are rotatable. As a result of rotation the filtered cake can be removed. The horizontally arranged apparatus makes the multi-purpose useage difficult. In addition, the mechanism is too complicated for making the apparatus variable.

Another developed solution is represented by the apparatus described in DE—1 461 487. Its advantage is its vertical arrangement, where the material to be filtered is admitted at the top, while separate discharge of the settled heavy phase and filtrate is possible at the bottom. The apparatus enables the simultaneous settling and filtering. However the apparatus is less suitable for carrying out any other task. Thus for instance in case of the so-called purification filtering the purifying agents cannot segregate on the surface of the filter, and they cannot be utilized this way.

A multiple-purpose chemical industrial apparatus, particularly for carrying out the different processes of the pharmaceutical technologies which has preferably a double-walled basic apparatus assembled from cup and attachable and openable dome cover, the basic apparatus has a part for admission of the material to be processed, e.g. one or several intake stubs arranged on the dome cover, a part for discharge of the material, e.g. outlet stub arranged on the cup and in given case devices suitable for temperature variation of the material, and the basic apparatus has an instrument set consisting of at least one mixing unit, one washing unit and one filter unit is known from FR—A—2 284 363. This apparatus is designed for teaching purposes. It may be used in a few different applications by mounting several auxiliary devices, such as e.g. coolers, heaters or the like on the outside of the cup. This requires much space for operation as well as for storing the large elements (e.g. distillation device) when they are not used.

The invention is aimed at the development of such chemical-industrial apparatus, in which solid, liquid and gaseous materials can be mixed, separated, their temperature varied in such a manner, that a single basic apparatus should be supplemented with the devices most suitable for carrying out the actual task.

The objective includes that — owing to the fast product alternation — it should not be necessary to exchange the apparatuses for carrying out the different technological steps.

The purpose of the invention is to realize such apparatus, which has only easily exchangeable elements or units without essential alteration of the basic apparatus, it should be suitable for purification by filtering, cake filtering, gas purification, absorption, drying, intermittent or continuous reaction, crystallization, gas washing, emulsion-separation, solvent extraction and in given case for heat transfer, or heat extraction during any process.

In accordance with the objective the multi-purpose chemical industrial apparatus according to the invention, particularly for carrying out different processes of the pharmaceutical technologies, has preferably a double walled basic apparatus composed of a cup and adjoining openable dome cover, the basic apparatus has an intake part for admitting the material to be processed, e.g. one or several intake stub(s) arranged on the dome cover, an outlet part for discharging the material, e.g. arranged as an outlet stub on the cup, and in given case it has devices suitable for temperature variation of the material, formed in such a way, that at least one washing unit and a filter unit are attached to the basic apparatus, as well as a combined attachment unit linked to the outlet stub of the cup.

Further criterion of the multi-purpose chemical-industrial apparatus according to the invention is, that the cup of the basic apparatus has a heater stub connected to heat source, e.g. heat exchanger, and the heater stub is led into the jacket space between the double wall of the cup.

The dome cover is seated on the cup along a connecting flange, while the lifting device and coacting hinge are between the cup and dome cover. The dome cover is provided with a stub suitable for connection of the washing unit, and in given case with a manhole allowing to reach into and/or admission into the apparatus space.

Mixing unit may be connected to the dome cover of the basic apparatus, which includes the motor-driven mixer shaft extending into the apparatus, and the mixing elements arranged at the end and formed in the shape of blades, furthermore a drive and/or coupling is built in between the driving motor and mixer shaft. The mixing unit is admitted into the apparatus space through the dome cover, e.g. through the cover stub or manhole.

The washing unit includes the revolving gear driven shaft extending into the apparatus and at least one spray pipe arranged on the shaft-end. The shaft passes through closed washing house, which has an inlet stub for admission of the washing liquid and a supporting flange fixed preferably to the cover stub. The spray pipe conforms to the character of the washing liquid and in given case it is provided with exchangeable nozzles.

The combined attachment unit includes a branching piece fixed to the cup of the basic apparatus and a connecting piece passing through the branching piece and reaching into the apparatus space. The branching piece has connecting devices of varying size for admission and discharge of materials with different consistency, e.g. one or several reduced stubs, and stub with low resistance, etc.

A connecting flange suitable for connection with the outlet stub of the cup is formed on the upper part of the branching piece. The upper end of the connecting piece is provided with the devices e.g. filter unit arranged in the apparatus space.

The combined attachment unit is complemented with one or several level adjusting extension(s) suitable for extracting the material from the zones at various levels of the apparatus space. The level adjusting extension includes the level adjusting tube, and the instant-connecting device fitting into the nest of the connecting piece arranged at the lower end of the level adjusting tube.

The filter unit is assembled from series of filter bags with large surface arranged in filter basket, while the filter bags are connected with the collecting pipe underneath. The filter bag is formed by a flat plate built into tubular frame, which has a network of preferably densely spaced channels on both sides leading into the tubular frame, while the filter bag is covered with exchangeable filter fabric conforming to the character of the material to be filtered.

The lower part of each filter bag has a connecting extension and the collecting pipe has nests suitable for receiving the connecting extensions. At a possible embodiment of the apparatus one, or several filter bag(s) are omitted, and the receiving nests are closed with plug as substitute of the connecting extension at the place of the missing filter bags.

The collecting pipe is provided with an instant connecting device for draining fitted to the instant connecting nest of the combined attachment unit. Supporting pieces in frictional contact with the inside wall of the cup are arranged on the outside of the filter bag.

At a possible embodiment of the apparatus a mixer apparatus is assembled from the basic apparatus and mixing unit, in another case a phase-separator unit is formed from the combined attachment unit and level adjusting extension, while the combination of the mixer apparatus and phase separator in given case gives a solvent extracting apparatus. In case of another embodiment emulsion separating apparatus is assembled from the basic apparatus and phase separator unit, or a gas washing apparatus from the basic apparatus, washing unit and combined attachment unit.

At a further embodiment filter — washing apparatus is assembled from the basic apparatus, washing unit, combined attachment unit and filter unit, or gas filtering purifying filter, cake filter, drier or adsorber apparatus is assembled from the basic apparatus, washing unit, combined attachment unit and in given case from the filter unit fitted with plug at the place of one or several filter bag(s).

The multi-purpose chemical industrial apparatus according to the invention has several technical and economic advantages. Its advantages are prominent particularly in the pharmaceutical industry, since the frequent product changes involve the frequent alteration of the technologies. The apparatus according to the invention does not require the keeping of several different apparatuses at the ready to carry out many different processes.

In the plant equipped with the multi-purpose apparatus, the technology can be quickly changed by the fast and simple reassembly of the apparatuses. The possibility is given for the assembly of an apparatus type for carrying out a given task, which is best suited to the characteristic properties of the materials to be processed.

The economic advantages are found first of all in the fact, that the reassembly of complete plant parts is not necessary when the technologies are changed and the target apparatus does not have to be substituted with other target apparatuses. As a result, various types of products can be produced in the plants within a shorter time, than with the earlier apparatuses.

The invention idea is based on the fact, that the apparatuses for carrying out characteristic tasks were generally suitable only for execution of a single chemical industrial process. Whereas there are multi-purpose apparatuses, but their capacity, qualitative parameters of the work performance lag far behind those of the target apparatuses.

The essence of the recognition is that by retaining the basic principle of the multi-purpose apparatuses, the possibility is given to bring about an apparatus from the properly selected assembly units, which are suitable to carry out any of the most frequently occurring chemical industrial processes with high capacity and with excellent qualitative indices. This allows the assembly of the multi-purpose apparatus from exchangeable and connectible units as a construction set. The set of devices shall contain in any case a mixing unit, washing unit, filter unit and combined attachment unit.

The invention is described by way of examples with the aid of drawings, in which:

Figure 1: Basic apparatus
Figure 2: Mixing unit
Figure 3: Washing unit
Figure 4: Combined attachment unit
Figure 5: Level adjusting extension
Figure 6: Filter unit
Figure 7: Filter bag and its connection
Figure 8: Mixer apparatus assembled from the basic apparatus and mixing unit
Figure 9: Extracting apparatus assembled from the basic apparatus, mixing unit, combined attachment unit and level adjusting extension

Figure 10: Emulsion separator assembled from the basic apparatus, combined attachment unit and level adjusting extension

Figure 11: Gas washing apparatus assembled from the basic apparatus, washing unit and combined attachment unit

Figure 12: Alternative of the units according to Figure 11, supplemented with filter unit as gas purifier, with other supplementary units

Figure 13: Purifying filter
Figure 14: Cake filter
Figure 15: Crystallizer apparatus
Figure 16: Drying apparatus
Figure 17: Adsorber apparatus.

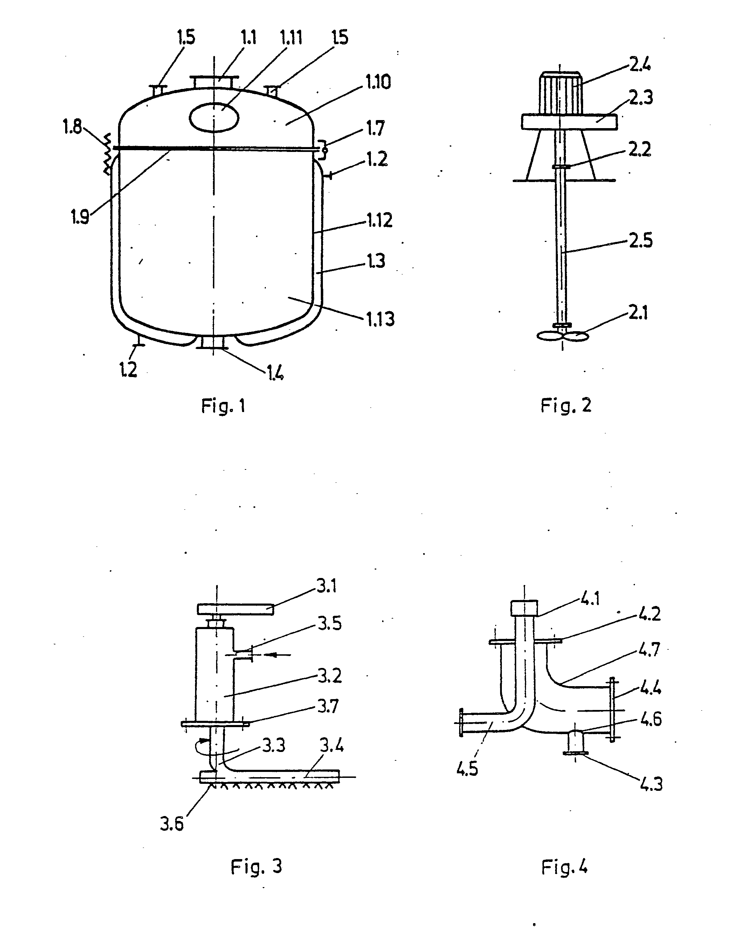

Figure 1 illustrates the basic apparatus 1 in schematic vertical section, assembled from two main parts, cup 1.12 and dome cover 1.10. Cup 1.12 is provided with one or several heater stub(s) 1.2, through which connection with for instance heat exchanger can be realized in order to vary the heat content of the material arranged in the apparatus space 1.13.

The connecting flange 1.9 is on the upper part of cup 1.12, along which the dome cover 1.10 fits to the cup 1.12. The connecting flange 1.9 serves for fastening the hinge 1.7 and the coacting lifting device 1.8. With the aid of this latter one the dome cover is lifted up and folded back.

In order to heat the cup 1.12, it is advisable to have double wall and the heating medium arriving through the heater stubs 1.2 is admitted into the jacket space 1.3 between the two walls. The double wall allows the transfer of the heat content of the heating medium to the apparatus space 1.13 without having contact with the material arranged therein.

The dome cover 1.10 can be provided with such manhole 1.11 which permits to reach into or in case of large sized basic apparatus to enter the apparatus space 1.13. The cover stub 1.1 is on the dome cover 1.10 which enables the connection to other units and one or several intake stub(s) 1.5 is/ are on the dome cover to admit materials into the apparatus space 1.13. Naturally it is necessary to provide the cup 1.12 with at least one outlet stub 1.4, through which the materials can be discharged from the apparatus space 1.13.

Figure 2 shows a mixing unit 2, the main structural parts of which are the mixing shaft 2.5 and the mixing elements 2.1 arranged at the bottom of the shaft. These latter ones may be formed as single mixing blades. In principle it is possible to arrange such mixing elements in the intermediate sections of the mixing shaft 2.5. The mixing shaft is rotated through a driving gear 2.3 and coupling 2.2 by a driving motor 2.4.

The actual washing part of the washing unit 3 shown in Figure 3 is represented by the spray pipe 3.4 provided with nozzles 3.6, which is kept in concentric rotation by the washing shaft 3.3. The washing shaft 3.3 is rotated by the revolving gear 3.1. The washing shaft 3.3 is conducted through the washing house 3.2 which has a supporting flange 3.7 connectible to the cover stub of basic apparatus 1, and a medium-intake stub 3.5 suitable for admission of the washing liquid. The washing unit 3 can be formed also in such a way, that it is actuated as a Segner's wheel by the reactive force of the washing liquid passing through the nozzles 3.6.

The combined attachment unit 4 is shown in Figure 4, the connecting flange 4.2 of which allows its fixing to the discharge stub 1.4 of the basic apparatus 1. The adjoining house 4.7 of the combined attachment unit 4 is provided with stubs 4.4 of low resistance, through which lumpy materials can be passed, furthermore with one or several reduced stub(s) 4.3 through which the materials of thinner consistency or lower viscosity can pass out of the branching space 4.6 of the adjoining house 4.7.

The connecting piece 4.5 passes through the branching space 4.6 of the adjoining house 4.7, on the top of which instant-connecting nest 4.1 is arranged. This enables fitting of the combined attachment unit 4 to the filter unit 6.

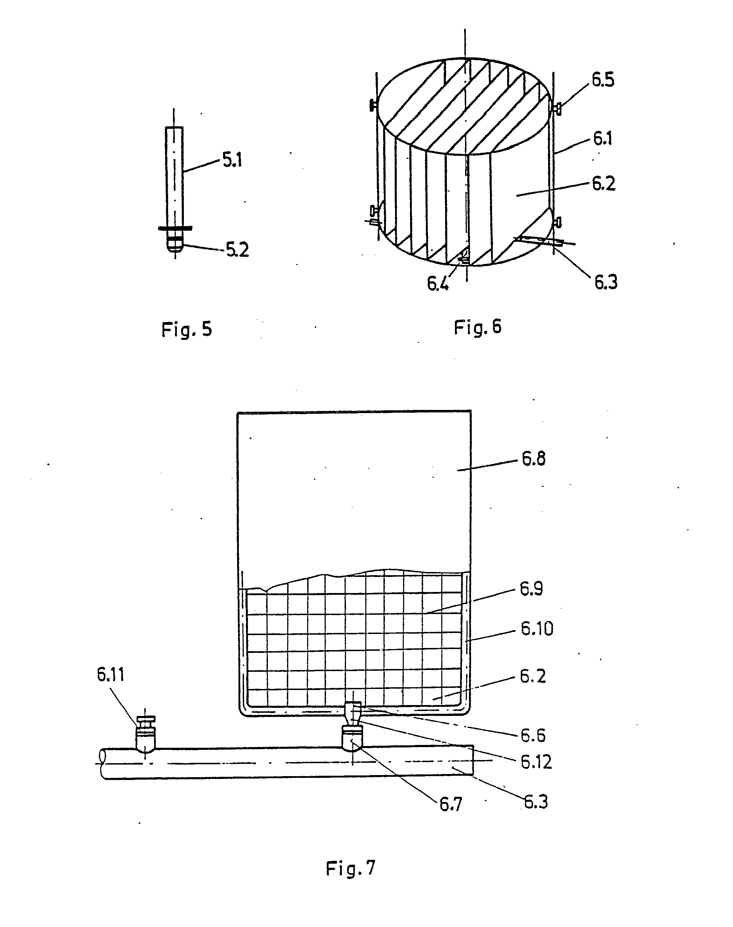

The combined attachment unit 4 can be complemented with the level adjusting extension 5 as shown in Figure 5. The instant connection device 5.2 is arranged on the lower end of the level adjusting tube 5.1, connectible similarly with the instant connecting nest 4.1. The connection is realized by simple compression in axial direction.

Figure 6 illustrates the filter unit 6 in assembled form, while Figure 7 shows the filter bag 6.2 separately and drawn to a larger scale than shown in Figure 6. The filter bags 6.2 are parallel plates, lined up vertically next to each other in the filter basket 6.1. Each filter bag 6.2 has a connecting extension 6.5 seated into the receiving nest 6.7 of the horizontal collecting pipe 6.3 arranged at the lower part of the filter basket 6.1. The connecting extension 6.6 is provided with neck 6.12. The instant connection device 6.4 is arranged in the centre of the collecting pipe 6.3, through which the filtrate passing into the collecting pipe can be drained.

For the lateral stabilization of the filter basket 6.1 in the basic apparatus 1, it is advisable to provide the filter basket 6.1 with supporting pieces 6.5 which bear up against the internal wall of cup 1.12. Each filter basket is formed as a simple flat plate and both surfaces have a dense network of channels 6.9. These channels lead into the tubular frame 6.10.

The flat plate forming the filter bag 6.2 is covered with filter fabric 6.8 to retain the impurities and in given case it is replaceable. The filtrate passes through the filter fabric first into the channels 6.9, then into the tubular frame 6.10, which carries it into the collecting pipe 6.3. If for some reason less filter bags are necessary, then one or several of them can be removed and replaced by plugs 6.11 in the receiving nests 6.7.

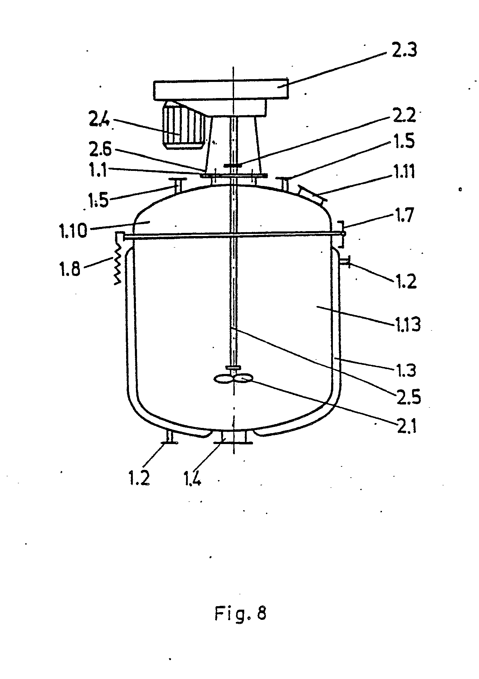

Figure 8 shows the mixer apparatus 12 assembled from the basic apparatus 1 and mixing unit 2. The parts of the mixing unit 2 reaching into the apparatus space 1.13 can be mounted either through the manhole 1.11 or by opening the dome cover 1.10. The mixing unit 2 is fixed by connecting the connecting flange 2.6 to the cover stub 1.1.

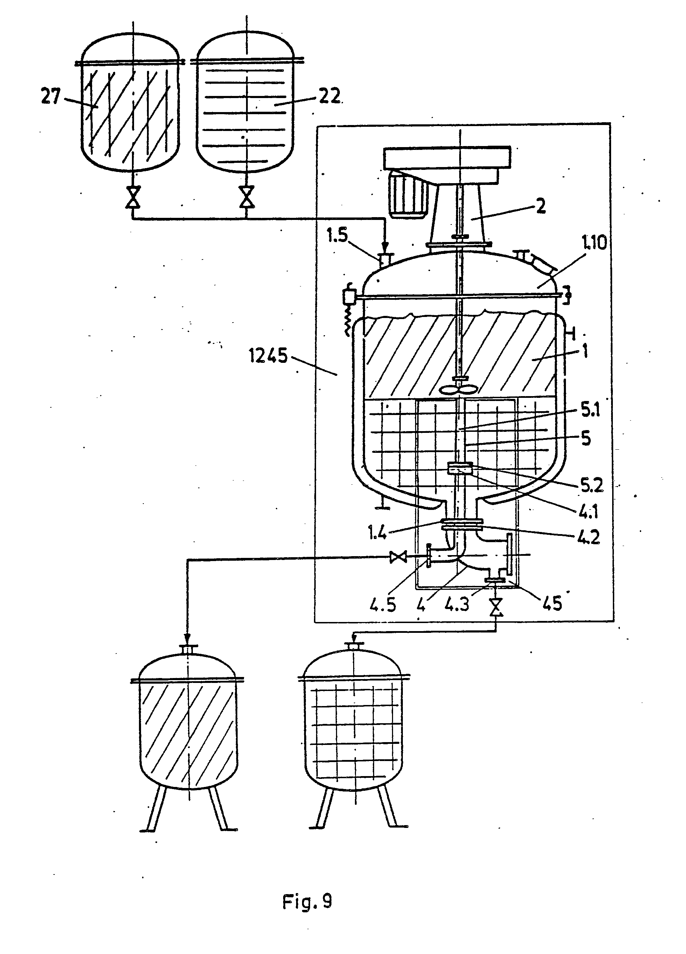

The mixer apparatus 12 can be coupled with the phase separator unit 45 assembled from the combined attachment unit 4 and level adjusting extension 5. This way the solvent extracting apparatus shown in Figure 9 is brought about. A connecting pipe is fitted to one of the intake stubs 1.5 of dome cover 1.10 and this is brought into connection with the washing liquid tank 22 and with the feeding tank 27. The extracting liquid is conducted from the washing liquid tank 22, while the material to be purified from the feeding tank 27 into the basic apparatus 1. The intensive contact of the washing liquid and material to be purified is ensured by the mixing unit 2. Under its influence the washing liquid dissolves the soluble components of the material to be purified. The new phases after resting can be discharged from the apparatus through the combined attachment unit 4. Draining of the light phase takes place through the connecting piece 4.5, while the heavier phase is drained through the reduced stub 4.3.

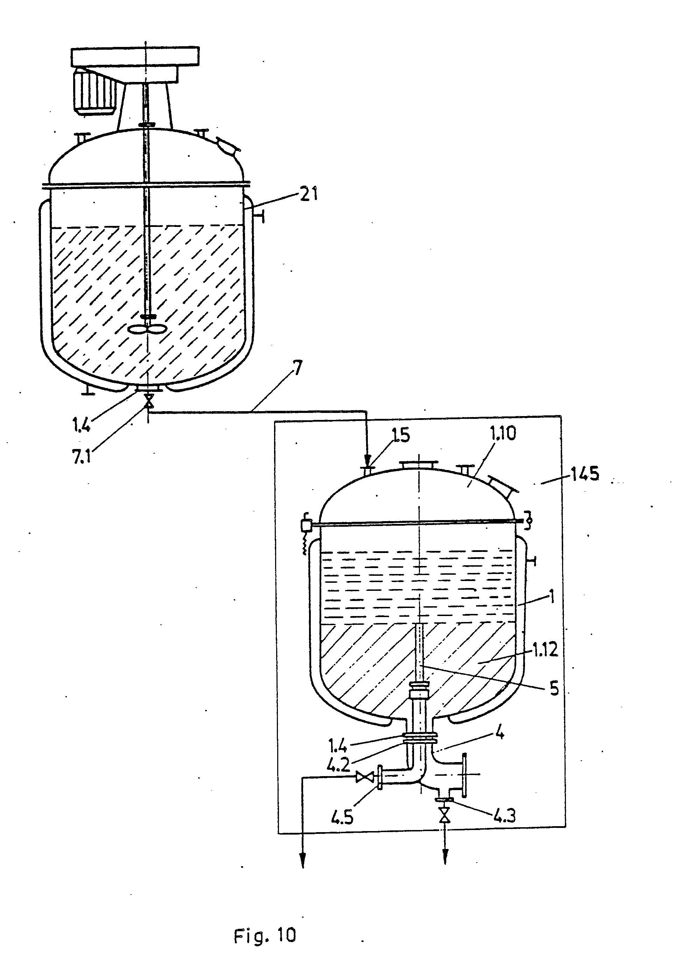

Simple emulsion separating apparatus 145 can be assembled as shown in Figure 10. The emulsion to be separated is admitted from tank 21 through the intake stub 1.15 of dome cover 1.10 similarly into the apparatus, assembled from the basic apparatus 1 and phase separator unit 45. This latter mixing can be realized in the form of autoclave, e.g. by use of the basic apparatus 1 and mixing unit 2. In this case the outlet stub 1.4 of the emulsion tank 21 is connected to the intake stub 1.5 of the emulsion separator apparatus 145. Some kind of regulating device 7.1 is built into the connecting pipe 7.

Assembly of the emulsion separator apparatus 145 is commenced with assembly of the phase separator unit 45 from the combined attachment unit 4 and level adjusting extension 5, then the connecting flange 4.2 is fastened to the outlet stub 1.4 of the basic apparatus 1. The emulsion in the emulsion separator apparatus 145 separates to emulsion phases after suitable resting time. Next the light phase is discharged through the connecting piece 45, and the heavy phase through the reduced stub 4.3.

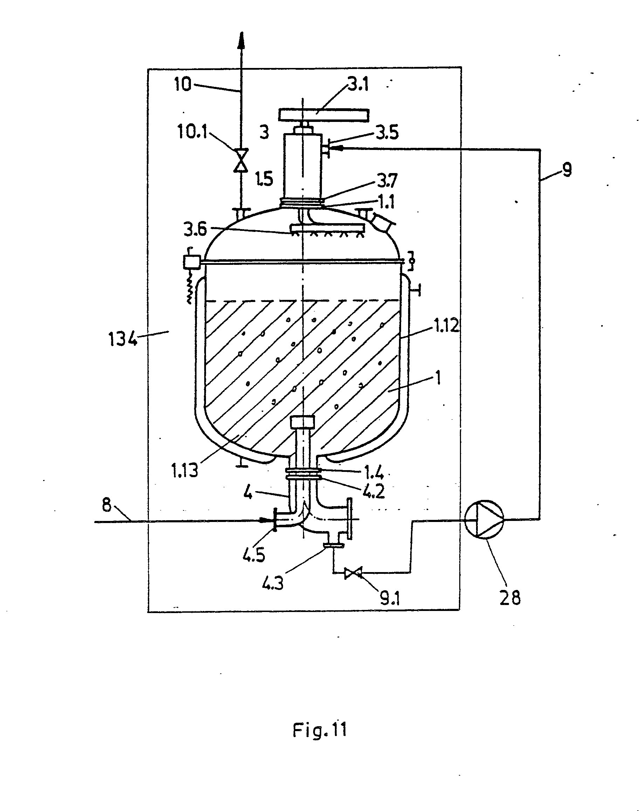

Figure 11 illustrates the gas washing apparatus 134 assembled from the basic apparatus 1, washing unit 3 and combined attachment unit 4. The supporting flange 3.7 of the washing unit 3 is connected to the cover stub 1.1 of the dome cover 1.10 and fixed. The discharge stub 1.4 of cup 1.12 is fastened similarly as before to the connecting flange 4.2 of the combined attachment unit 4.

The gas to be purified is conducted through gas pipe 8 into the connecting piece 4.5 of the combined attachment unit 4 and then into the apparatus space 1.13 of cup 1.12. The gas is washed with washing liquid. For this purpose the circulating pipe 9 is connected to the reduced stub 4.3 of the combined attachment unit 4 and to the medium intake stub 3.5 of the washing unit 3.

With the aid of the circulating pump 20 built into the circulating pipe 9, the washing liquid is passed off through the combined attachment unit 4, then returned into the washing unit and then into the apparatus space 1.13 of the basic apparatus 1. For the quantitative control of the washing liquid an adjustable shut-off device 9.1 e.g. valve is built into the circulating pipe 9.

For removal of the gas purified in the gas washing apparatus 134, a drain pipe 10 is used into which a shut-off device 10.1 suitable for the quantitative control can be built in. Naturally the circulating pump 20 is connected into the circulating pipe 9 in such a way, that its suction side is connected to the combined attachment unit 4 and its pressure side to the washing unit 3.

The pressurized washing liquid flowing through the nozzles 3.6 of the washing unit 3 brings about a fine spray fog in the apparatus space 1.13 of cup 1.12, under the influence of which the undesirable components can be effectively removed from the gas to be purified. The gas arriving from underneath into the apparatus space 1.13 first bubbles through the washing liquid in the apparatus space 1.13, then through the gas space above, where it is purified in the spray fog of the washing liquid to the desired degree.

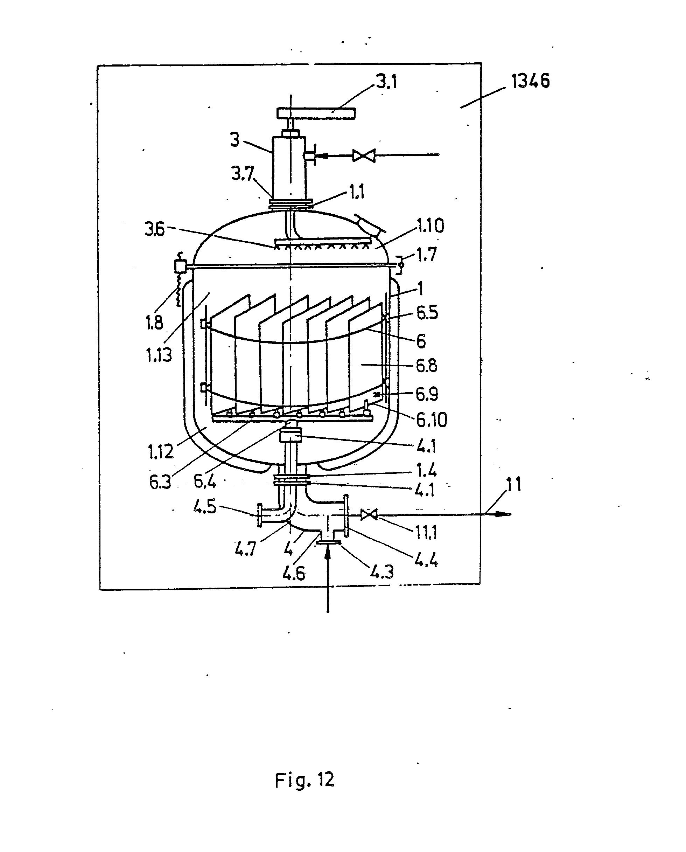

The gas purifier apparatus 1346 shown in Figure 12 is brought about by complementing the former gas washing apparatus 134 with the filter unit 6. At the assembly first the basic apparatus 1 and combined attachment unit 4 are fitted to each other as already described earlier. Next — after opening the dome cover 1.10 — the filter unit 6 is placed into the apparatus space 1.13. During this process the instant connecting device 6.4 of the filter unit 6 is pressed into the instant connecting nest 4.1 of the combined attachment unit 4.

After closing the dome cover 1.10, the supporting flange 3.7 of the washing unit 3 is fastened with the cover stub 1.1. The impure gas is forwarded through the reduced stub 4.3 into the branching space 4.6 of the adjoining house 4.7, then from there to the apparatus space 1.13 of cup 1.12.

The pressurized gas returns through the filter fabric 6.8, channels 6.9, tubular frame 6.10 collecting pipe 6.3 and instant connecting device 6.4 of the filter unit 6 into the combined attachment unit 4, through the connecting piece 4.5 of which it passes off, while the impurity is retained by the filter fabric 6.8. Clogging of the filter fabric 6.8 pores is continuously eliminated by regeneration with the washing liquid.

The washing liquid is admitted into the apparatus space 1.13 through the nozzles 3.6 of the washing unit 3, while the impure washing liquid is discharged from the apparatus space 1.13 through the drain pipe 11 provided suitably with shut-off device 11.1 connected to the low resistant stub 4.4 of the combined attachment unit 4. Thus the filter fabric 6.8 is cyclically regenerated.

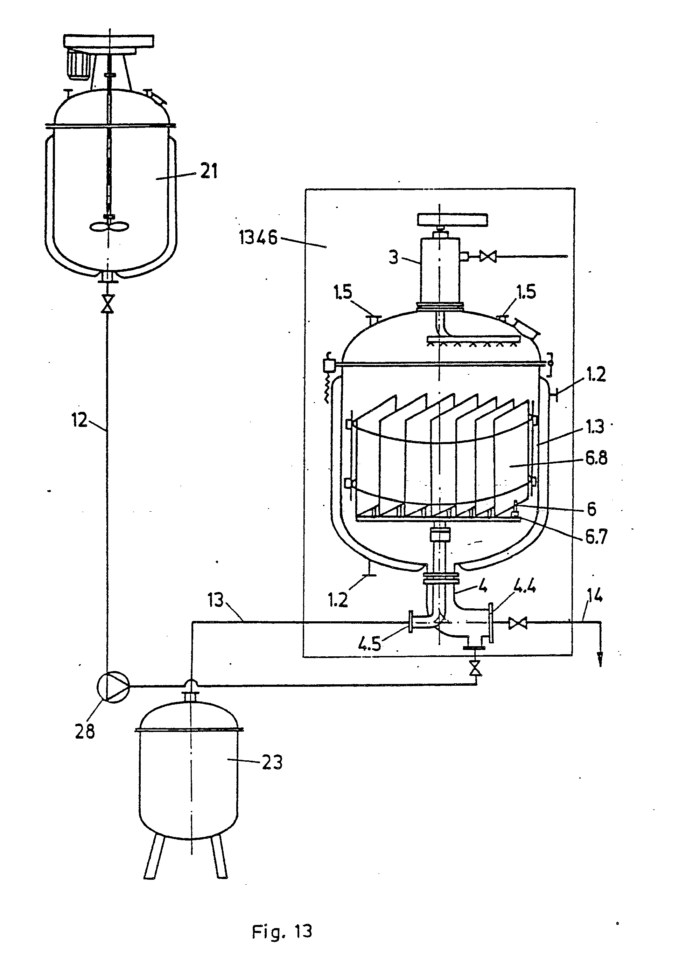

Figure 13 shows the purifying filter 1346 assembled similarly as the previous unit. The material is passed from the mixer autoclave 21 through the intake pipe 12 into the interior of the purifying filter 1346. Pressure pump 28 is built into the intake pipe 12.

The solution present in given case in the purifying materials and mixed for due time in the mixing autoclave 21 is fed through the combined attachment unit 4 into the purifying filter 1346. When materials crystallizing by cooling are treated, the cooling medium is conducted into the jacket space 1.13 of cup 1.12.

Under the pressure of the pressure pump 20 the solution passes through the connecting piece 4.5 of the combined attachment unit 4 into the discharge pipe 13 as described earlier, and then into the collecting tank 23 of the washing liquid. Meanwhile the undesirable impurities settle on the surface of the filter fabric 6.8, from where they can be removed with washing liquid admitted under overpressure through the washing unit 3. Thus the filter fabric 6.8 can be cyclically regenerated.

The slurry collected in the branching space 4.6, or in the apparatus space 1.13 can be removed through the drain pipe connected to the low resistant stub 4.4 of the combined attachment unit 4.

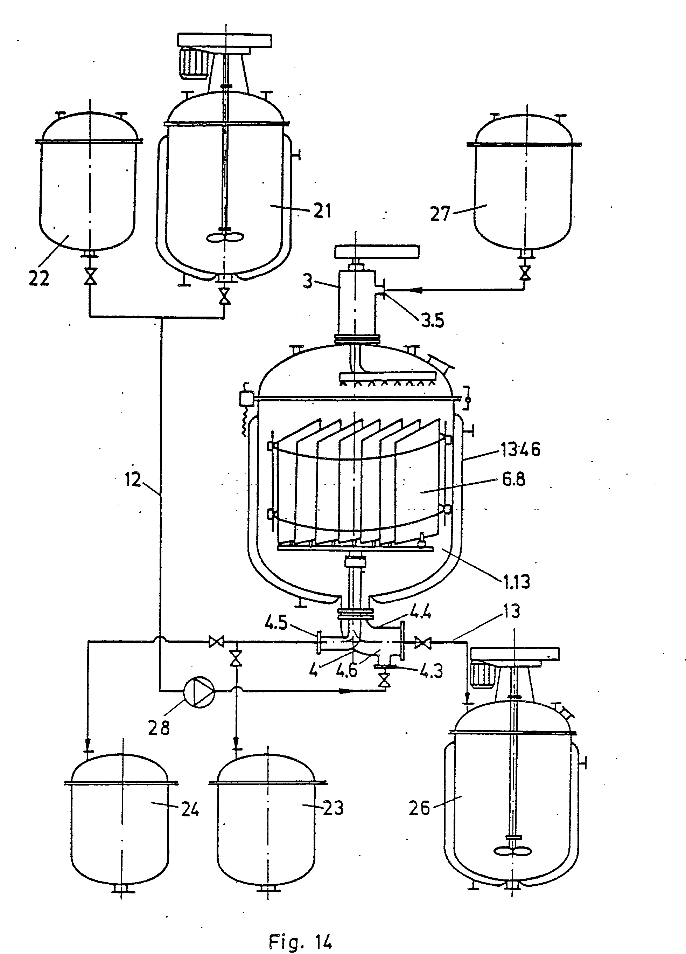

The cake filtering apparatus 1346 shown in Figure 14 can be assembled from the same units as before. The material pressed by the pressure pump 28 is carried through intake pipe 12 from the autoclave mixer 21 to the reduced stub 4.3 of the combined attachment unit 4, and then into the branching space 4.6, then into the apparatus space 1.13.

If for instance crystalline suspension is discharged from the mixing autoclave 21, the crystalline material remains on the surface of the filter fabric 6.8, while the matrix passes through the connecting piece 4.5 into the collecting tank 24. The matrix residue between the crystal particles retained on the filter fabric 6.8 is removed with washing liquid derived from tank 22. This takes place in such a way, that the washing liquid arriving through the reduced stub 4.3 is pressed through the crystal layer, then the used up washing liquid is drained through the connecting piece 4.5 into the collecting tank 23.

The useful material retained on the filter fabric 6.8 is dissolved with washing liquid from the feeding tank 27, then it is carried along through the low resistant stub 4.4 into the suspension autoclave 26. The suspension autoclave 26 itself may be assembled from the basic apparatus 1 and mixing unit 2. Similarly the mixer autoclave 21 too can be assembled from the basic apparatus 1 and mixing unit 2.

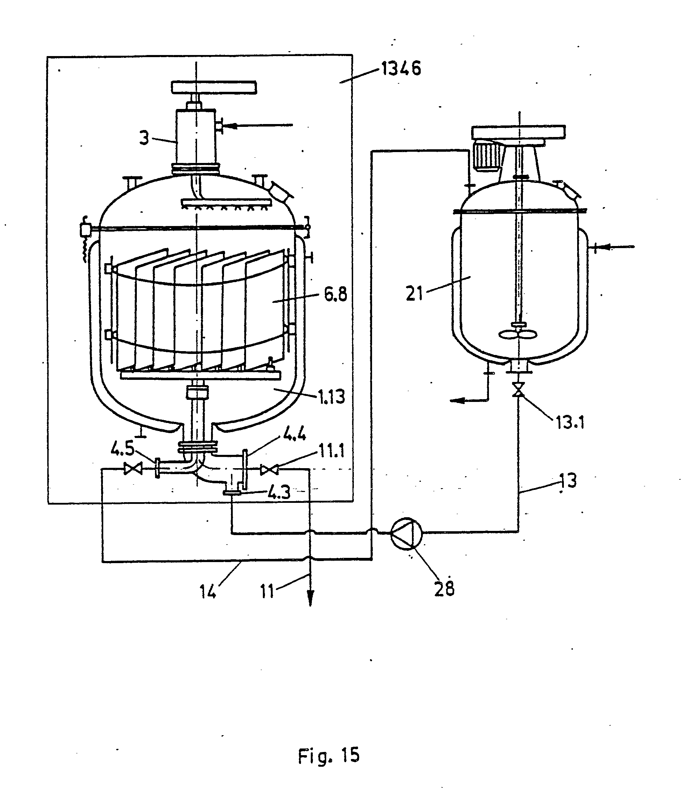

Figure 15 demonstrates the crystallizing apparatus 1346 built up from the same units as earlier. Crystallization in the mixer apparatus 21 takes place under the influence of cooling. However size of the crystals can not be regulated. Thus when the largest crystals approach the required size, then upon opening the shut-off device 13.1 of the discharge pipe 13, the crystal slurry is pressed with the pressure pump 28 through the reduced stub 4.3 into the apparatus space 1.13 of the crystallizing apparatus 1346.

During the process the already suitable crystals remain on the surface of the filter fabric 6.8, while the suspension and rest of the slurry are recirculated through the connecting piece 4.5 of the combined attachment unit 4 and drain pipe 14 into the mixer apparatus 21. By favourable selection of the pump capacity 28, it can be attained that crystals in excess of the acceptable size should not be formed.

The crystal particles settled on the surface of the filter fabric 6.8 are removed by actuation of the washing unit 3. This crystal slurry is removed from the crystallizing apparatus through the discharge pipe 11 fitted with low resistant stub and connected with the shut-off device 11.1.

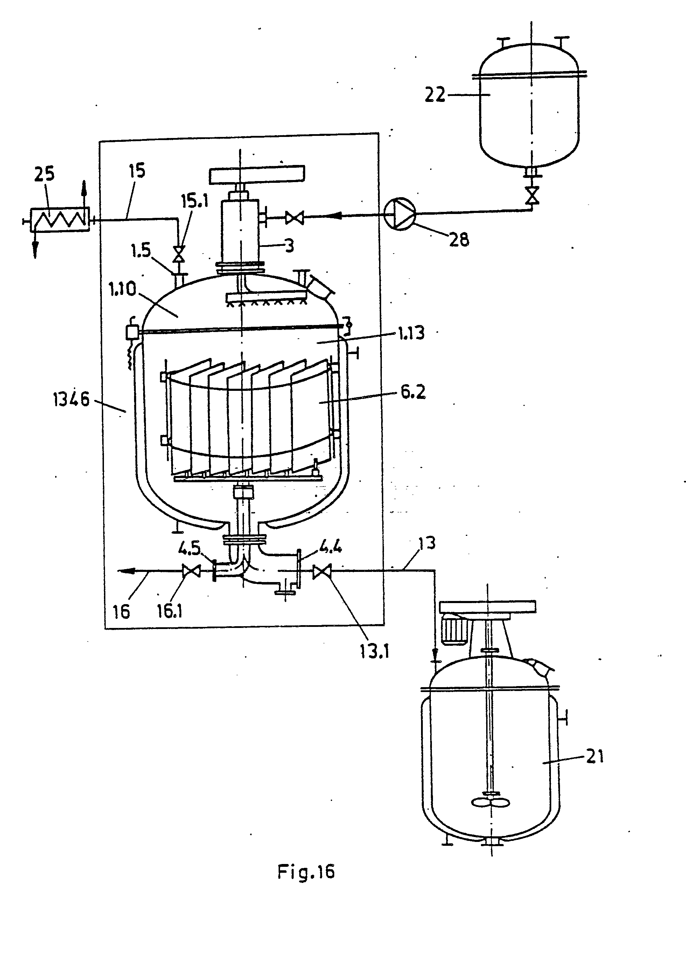

The previously mentioned structural units are suitable for assembly of a drying apparatus 1346 shown in Figure 16. The useful material is retained on the filter fabric 6.8 of the filter unit's 6 filter bag 6.2 by the method of cake filtering as already shown in Figure 14. Then the content is let off from the apparatus space 1.13 through the connecting piece 4.5, and the heating pipe 15 is connected to the intake stub 1.5 of dome cover 1.10. Drying gas is admitted into the apparatus space through the heating pipe with the heat exchanger 25. Under its influence the hot drying gas passes through the pores retained on the filter bags 6.2 and evaporates the humidity therefrom.

The wet gas is removed through the suction pipe 16 attached to the connecting piece 4.5 suitably with the aid of vacuum. After drying to the required degree, the shut-off device of the heating pipe 15 and that of the suction pipe 16 are closed, then the shut-off device 13.1 of the discharge pipe 13 connected to the low resistant stub 4.4 is opened.

Next the washing unit 3 will be capable to wash down the cakes retained on the filter bags 6.8 with the aid of the washing liquid flowing from the tank 22 through the pressure pump 28, and then the cakes are forwarded through the discharge pipe 13 into the mixing autoclave 21.

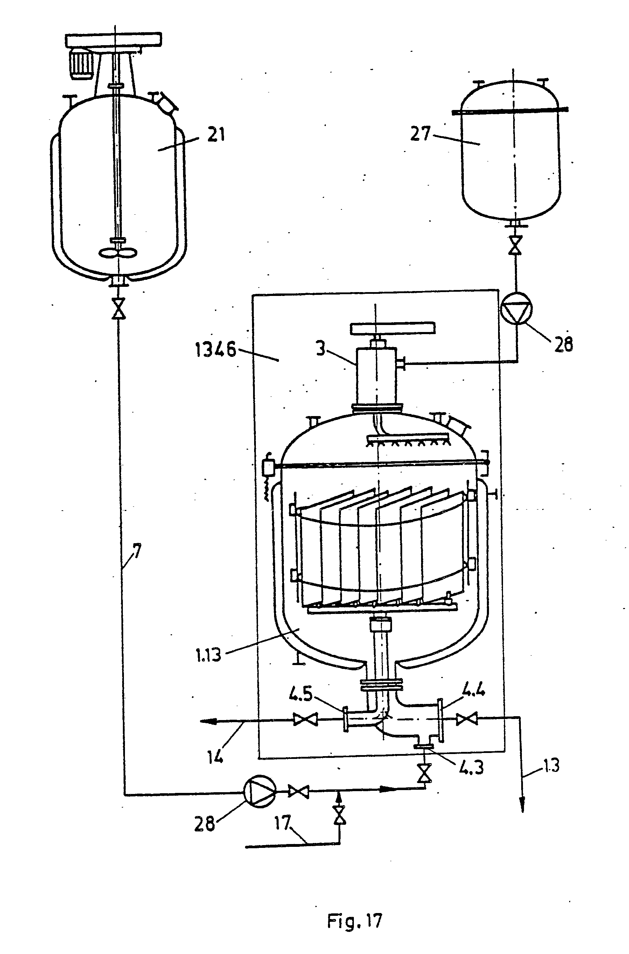

The adsorber apparatus 1346 shown in Figure 17 is built up from the former units. The adsorbent passing from the mixing autoclave 21 through the connecting pipe 7 is forwarded with pressure pump 26 to the reduced stub 4.3 of the combined attachment unit 4 and then into the apparatus space 1.13.

The solid particles of the adsorbent suspended in the mixing autoclave 21 cover the surface of the filter bags 6.2, while the suspension liquid can be discharged through the drain pipe 14 attached to the connecting piece 4.5 from the apparatus space 1.13. The liquid or gas to be adsorbed is admitted into the apparatus space 1.13 through pressure pipe 17 and similarly through the reduced stub 4.3. The liquid to be adsorbed passes through the adsorbent deposited on the filter bags 6.2 and it becomes fixed, while the other components pass off through the connecting piece 4.5 and drain pipe 14.

When the adsorbent layer is used up, inflow of the liquid through the pressure pipe 17 is stopped, then washing liquid is admitted from the feeding tank 27 with pressure pump 28 into the washing unit 3 and by this the used up adsorbent is removed with the aid of the washing unit. This together with the washing liquid is discharged from the apparatus space 1.13 through the low resistant stub 4.4 and connected discharge pipe 13.

The multi-purpose chemical industrial apparatus according to the invention — as demonstrated above — is suitable for several chemical industrial processes. Its advantages are obvious mainly in the field of the pharmaceutical industry and organic chemical industry, where the production takes place mostly intermittently and with dosages of relatively small weight. In these industrial sectors highly valuable products are processed with highly valuable reagents and the qualitative requirements exceed the degree characteristic to the other sectors of the chemical industry. According to the experiences the multi-purpose apparatus is completely suitable to meet these high qualitative requirements.

**Claims**

1. Multi-purpose chemical industrial apparatus, particularly for carrying out the different processes of the pharmaceutical technologies, which has preferable a double-walled basic apparatus assembled from cup and attachable and openable dome cover, the basic apparatus has a part for admission of the material to be processed, e.g. one or several intake stub(s) arranged on the dome cover, a part for discharge of the material, e.g. outlet stub arranged on the cup and in given case devices suitable for temperature variation of the material, and the basic apparatus has an instrument set consisting of at least one mixing unit, one washing unit and one filter unit, characterized by a combined attachment unit (4) connectible to the outlet stub (1.4) of the cup (1.12), the washing shaft (3.3) of the washing unit (3) passes through a closed washing house (3.2), the washing house (3.2) has a medium-intake stub (3.5) for admitting the washing liquid and a supporting flange (3.7) fixable to the dome cover (1.10) preferably to its cover stub (1.1), the combined attachment unit (4) includes branching piece (4.6) fastened to the cup (1.12) of the basic apparatus (11) and a connecting piece (4.5) passing through the branching piece (4.6) and reaching into the apparatus space (1.13), the adjoining house (4.7) has connecting devices of varying size suitable for admission and discharge of materials with different consistency, for instance one or several reduced stub(s) (4.3) or low resistant stub (4.4), the filter unit (6) is assembled from series of filter bags (6.2) with large surface arranged in filter basket (6.1) while the filter bags (6.2) are connected to collecting pipe (6.3) underneath, the washing unit (3) and the filter unit (6) are placed in the cup (1.12) of the basic apparatus (1).

2. Apparatus as claimed in claim 1, characterized in that mixing unit (2) is connected to the dome cover (1.10) of the basic apparatus (1).

3. Apparatus as claimed in claim 1 or 2, characterized in that the mixing unit (2) includes a motor (2.4) -driven mixing shaft (2.5) reaching into the apparatus space (1.13), and mixing elements (2.1) formed for instance as blades arranged at least at the shaft-end, furthermore driving gear (2.3) and/or coupling (2.2) are built in between the driving motor (2.4) and mixing shaft (2.5).

4. Apparatus as claimed in claim 1, characterized in that the washing unit (3) includes a revolving gear (3.1) -driven washing shaft (3.3) reaching into the apparatus space (1.13) and at least one spray pipe (3.4) arranged at the shaft-end.

5. The apparatus as claimed in claim 1, characterized in that the connecting flange (4.2) is formed on the upper part of the branching piece (4.6) for fastening to the discharge stub (1.4) of the cup (1.12).

6. Apparatus as claimed in claim 1, characterized in that the upper end of the connecting piece (4.5) is provided with devices arranged in the apparatus space, for instance with instant-connecting nest (4.1) suitable for direct connection e.g. with filter unit (6).

7. Apparatus as claimed in claim 5 or 6, characterized in that the combined attachment unit (4) is complemented with one or several level adjusting extension(s) (5) suitable for extraction of material from the zones of varying height of the apparatus space (1.13).

8. Apparatus as claimed in claim 7, characterized in that the level adjusting extension (5) includes level adjusting tube (5.1) and instant-connecting device (5.2) arranged at the lower end of the level adjusting tube (5.1) fitting into the instant-connecting nest (4.1) of the connecting piece (4.5).

9. Apparatus as claimed in claim 1, characterized in that the filter bag (6.2) is formed by flat plate encased in tubular frame (6.10), which has preferably densely spaced network of channels (6.9) on both sides leading into the tubular frame (6.10), while the filter bag (6.2) is covered with exchangeable filter fabric (6.8) conforming to the character of the material to be filtered.

10. Apparatus as claimed in claim 1, characterized in that the lower part of each filter bag (6.2) has connecting extension (6.6) and the collecting pipe (6.3) has receiving nests (6.7) suitable for seating the connecting extensions (6.6).

11. Apparatus as claimed in claim 10, characterized in that one or several filter bag(s) (6.2) is/are omitted, while the receiving nests (6.7) at the place of the missing filter bags (6.2) are closed with plug (6.11) substituting the connecting extension (6.6).

12. Apparatus as claimed in any of claims 10 or 11, characterized in that the collecting pipe (6.3) is provided with instant-connecting devices (6.4) for draining, fitted to the instant-connecting nest (4.1) of the combined attachment unit (4).

13. Apparatus as claimed in any of claims 10 to 12, characterized in that the supporting pieces (6.5) are arranged on the outside of filter basket (6.1) being in frictional contact with the internal wall of the cup (1.12).

14. Apparatus as claimed in claim 1, characterized in that the phase separator unit (4.5) is assembled from the combined attachment unit (4) and level adjusting extension (5).

15. Apparatus as claimed in claim 1, characterized in that the solvent extracting apparatus (1245) is assembled from the mixer apparatus (12) and phase separator unit (45).

16. Apparatus as claimed in claim 1, characterized in that emulsion separator apparatus (145) is assembled from the basic apparatus (1) and phase separator unit (45).

17. Apparatus as claimed in claim 1, characterized in that gas washing apparatus (134) is assembled from the basic apparatus (1), washing unit (3) and combined attachment unit (4).

18. Apparatus as claimed in claim 1, characterized in that filter-washing apparatus (1346) is assembled from the basic apparatus (1), washing unit (3), combined attachment unit (4) and filter unit (6).

19. Apparatus as claimed in claim 18, characterized in that gas filter, purifying filter, cake filter drying or adsorber apparatuses are assembled from the basic apparatus (1), washing unit (3), combined attachment unit (4) and filter unit (6) having in given case plug (6.11) in place of one or several filter bag(s) (6.2).

**Patentansprüche**

1. Chemisches, industrielles Mehrzweckgerät, besonders zur Durchführung verschiedener Verfahren der pharmazeutischen Technologien, mit vorzugsweise einem doppelwandigen Basisgerät, das aus einem Behälter und einem befestigbaren und öffenbaren gewölbten Deckel aufgebaut ist, wobei das Basisgerät einen Teil für die Einbringung des zu bearbeitenden Materials, beispielsweise einen oder mehrere Einlaßstutzen, die auf dem gewölbten Deckel angebracht sind, einen Teil für die Entladung des Materials, beispielsweise einen Auslaßstutzen, der auf dem Behälter angebracht ist, und gegebenenfalls Vorrichtungen, die geeignet sind, die Temperatur des Materials zu verändern, aufweist und einen Satz von Instrumenten, der zumindest aus einer Mischungseinheit, einer Wascheinheit und einer Filtereinheit besteht, umfaßt, gekennzeichnet durch eine kombinierte Anschlußeinheit (4), die mit dem Auslaßstutzen (1.4) des Behälters (1.12) verbindbar ist, eine Waschwelle (3.3) der Wascheinheit (3), die durch ein geschlossenes Waschgehäuse (3.2) geht, ein Waschgehäuse (3.2) mit einem Mediumeinlaßstutzen (3.5) zur Einbringung der Waschflüssigkeit und einem tragenden Flansch (3.7), der auf dem gewölbten Deckel (1.10), vorzugsweise auf seinen Deckstutzen (1.1) festlegbar ist, wobei die kombinierte Anschlußeinheit (4) ein Verzweigungsstück (4.6), das auf dem Behälter (1.12) des Basisgerätes festgelegt ist, und ein Verbindungsstück (4.5), das durch das Verzweigungsstück (4.6) hindurchgeht und in den Innenraum (1.13) des Gerätes hineinreicht, umfaßt und das benachbarte Gehäuse (4.7) Verbindungsvorrichtungen von unterschiedlicher Größe, die für die Einbringung und Entladung von Materialien verschiedener Konsistenz geeignet sind, z.B. einen oder mehrere reduzierte Stutzen (4.3) oder Stutzen geringen Widerstandes (4.4), aufweist, und eine aus einer Reihe von Filtertüten (6.2) mit großer Oberfläche zusammengesetzte Filtereinheit, die in dem Filterkorb (6.1) angeordnet ist, während die Filtertüten (6.2) unterhalb mit einem Sammelrohr (6.3) verbunden sind, wobei die Wascheinheit (3) und die Filtereinheit (6) in dem Behälter (1.12) des Basisgerätes (1) angeordnet sind.

2. Gerät nach Anspruch 1, dadurch gekennzeichnet, daß die Mischungseinheit (2) mit dem gewölbten Deckel (1.10) des Basisgerätes (1) verbunden ist.

3. Gerät nach Anspruch 1 oder 2, dadurch gekennzeichnet, daß die Mischungseinheit (2) eine Motor (2.4) -betriebene Mixerwelle (2.5), welche in den Innenraum (1.13) des Gerätes reicht, und zumindest am Wellenende angeordnete Mischungselemente (2.1), beispielsweise Schaufeln, aufweist und daß ein Getriebe (2.3) und/oder eine Kupplung (2.2) zwischen dem Antriebsmotor (2.4) und der Mixerwelle (2.5) eingebaut ist.

4. Gerät nach Anspruch 1, dadurch gekennzeichnet, daß die Wascheinheit (3) ein durch ein drehendes Getriebe (3.1) angetriebene Waschwelle (3.3), die in den Innenraum (1.13) des Gerätes reicht, und zumindest ein am Wellenende angebrachtes Sprührohr (3.4) beinhaltet.

5. Gerät nach Anspruch 1, dadurch gekennzeichnet, daß der Verbindungsflansch (4.2) auf dem oberen Teil des Verzweigungsstückes (4.6) zur Fixierung am Entladungsstutzen (1.4) des Behälters (1.12) ausgebildet ist.

6. Gerät nach Anspruch 1, dadurch gekennzeichnet, daß das obere Ende des Verbindungsstückes (4.5) mit Vorrichtungen, die im Innenraum des Gerätes angebracht sind, beispielsweise mit einem Schnellverbindungsteil (4.1), der zur direkten Verbindung, z.B. mit der Filtereinheit (6), geeignet ist, ausgestattet ist.

7. Gerät nach Anspruch 5 oder 6, dadurch gekennzeichnet, daß die kombinierte Anschlußeinheit (4) durch eine oder mehrere höhenverstellbare Verlängerungen (5) ergänzt wird, die für die Extraktion von Material aus Bereichen varrierender Höhe im Innenraum (1.13) des Gerätes geeignet sind.

8. Gerät nach Anspruch 7, dadurch gekennzeichnet, daß die höhenverstellbare Verlängerung (5) ein höhenverstellbares Rohr (5.1) und eine Schnellverbindungsvorrichtung (5.2) beinhaltet, die am unteren Ende des höhenverstellbaren Rohres (5.1) angebracht ist und mit dem Schnellverbindungsteil (4.1) des Verbindungsstückes (4.5) zusammenpaßt.

9. Gerät nach Anspruch 1, dadurch gekennzeichnet, daß die Filtertüte (6.2) aus flachen Platten umgeben von einem rohrförmigen Rahmen (6.10) aufgebaut ist, welche vorzugsweise ein Netzwerk von dicht zusammenliegenden Kanälen (6.9) auf beiden Seiten hat, die in den rohrförmigen Rahmen (6.10) führen, während die Filtertüte (6.2) mit einem austauschbaren Filtergewebe (6.8) bedeckt ist, welches dem zu filtrierenden Material entspricht.

10. Gerät nach Anspruch 1, dadurch gekennzeichnet, daß der untere Teil jeder Filtertüte (6.2) einen Verbindungsfortsatz (6.6) hat und das Sammelrohr (6.3) Gegenstücke (6.7) hat, die zur Verbindung mit den Verbindungsfortsätzen (6.6) geeignet sind.

11. Gerät nach Anspruch 10, dadurch gekennzeichnet, daß eine oder mehrere Filtertüten (6.2) weggelassen wird (werden), während die Gegenstücke (6.7) anstelle der fehlenden Filtertüten (6.2) mit Stopfen (6.11) als Ersatz der Verbindungsfortsätze (6.6) verschlossen werden.

12. Gerät nach Anspruch 10 oder 11, dadurch gekennzeichnet, daß das Sammelrohr (6.3) mit Schnellverbindungsvorrichtungen (6.4) zur Ableitung ausgestattet ist, die mit den Schnellverbindungsteilen (4) der kombinierten Anschlußeinheit (4) zusammenpassen.

13. Gerät nach einem der Ansprüche 10 bis 12, dadurch gekennzeichnet, daß Abstützstücke (6.5) auf der Außenseite des Filterkorbes (6.1) in Reibungskontakt mit der Innenwand des Behälters (1.12) angebracht sind.

14. Gerät nach Anspruch 1, dadurch gekennzeichnet, daß sich die Phasentrenneinheit (4.5) aus der kombinierten Anschlußeinheit (4) und der höhenverstellbaren Verlängerung (5) zusammensetzt.

15. Gerät nach Anspruch 1, dadurch gekennzeichnet, daß sich das Lösungsmittelextraktionsgerät (1245) aus dem Mixergerät (12) und der Phasentrenneinheit (45) zusammensetzt.

16. Gerät nach Anspruch 1, dadurch gekennzeichnet, daß sich das Emulsionstrennungsgerät (145) aus dem Basisgerät (1) und der Phasentrenneinheit (45) zusammensetzt.

17. Gerät nach Anspruch 1, dadurch gekennzeichnet, daß sich das Gaswaschgerät (134) aus dem Basisgerät (1), des Wascheinheit (3) und der kombinierten Anschlußeinheit (4) zusammensetzt.

18. Gerät nach Anspruch 1, dadurch gekennzeichnet, daß sich das Filter-Wasch-Gerät (1346) aus dem Basisgerät (1), der Wascheinheit (3), der kombinierten Anschlußeinheit (4) und der Filtereinheit (6) zusammensetzt.

19. Gerät nach Anspruch 18, dadurch gekennzeichnet, daß sich Gasfilter-, Reinigungsfilter-, Kuchenfiltertrocknungs- oder Adsorbergeräte aus dem Basisgerät (1), der Wascheinheit (3), der kombinierten Anschlußeinheit (4) und der Filtereinheit (6), die gegebenenfalls einen Stopfen (6.11) anstelle von einer oder mehreren Filtertüten (6.2) hat, zusammensetzen.

## Revendications

1. Appareil à usages multiples pour l'industrie chimique, notamment destiné à la mise en oeuvre de différentes opérations des technologies pharmaceutiques, comprenant de préférence un appareil fondamental à double paroi monté à partir d'une cuvette et d'un couvercle en forme de dôme et qui peut être fixé et ouvert, l'appareil fondamental ayant une partie destinée à l'admission du matériau à traiter, par exemple une ou plusieurs tuyauteries d'admission à passage direct disposées sur le couvercle, une partie d'évacuation du matériau, par exemple une tuyauterie de sortie à passage direct placée sur la cuvette et, dans certains cas, des dispositifs convenant à une variation de la température du matériau, et l'appareil fondamental ayant un jeu d'instruments formés d'au moins un ensemble de mélange, un ensemble de lavage et un ensemble de filtration, caractérisé par un ensemble combiné (4) de fixation destiné à être raccordé à la tuyauterie de sortie à passage direct (1.4) de la cuvette (1.12), la colonne de lavage (3.3) de l'ensemble (3) de lavage passe dans un boîtier fermé de lavage (3.2), ce dernier ayant une tuyauterie d'admission de fluide à passage direct (3.5) destiné à l'admission de liquide de lavage et une bride de support (3.7) destinée à être fixée au couvercle (1.10), de préférence à sa tuyauterie à passage direct (1.1), l'ensemble combiné (4) de fixation comprend une pièce de dérivation (4.6) fixée à la cuvette (1.12) de l'appareil fondamental (1) et une pièce de raccordement (4.5) passant dans la pièce de dérivation (4.6) et pénétrant dans l'espace (1.13) de l'appareil, le boîtier adjacent (4.7) a des dispositifs de raccordement de diverses dimensions convenant à l'admission et à l'évacuation des matériaux de consistances différentes, par exemple une ou plusieurs tuyauteries à passage direct (4.3) de diamètre réduit ou une tuyauterie à passage direct (4.4) présentant une faible résistance, l'ensemble de filtration (6) est monté à partir d'une série de sacs de filtration (6.2) ayant une grande surface et placés dans le panier de filtration (6.1) alors que les sacs de filtration (6.2) sont raccordés à la tuyauterie collectrice (6.3) par dessous, et l'ensemble de lavage (3) et l'ensemble de filtration (6) sont placés dans la cuvette (1.12) de l'appareil fondamental (1).

2. Appareil selon la revendication 1, caractérisé en ce que l'ensemble de mélange (2) est raccordé au couvercle (1.10) en forme de dôme de l'appareil fondamental (1).

3. Appareil selon l'une des revendications 1 et 2, caractérisé en ce que l'ensemble de mélange (2) comporte un arbre (2.5) de mélange entraîné par un moteur (2.4) et pénétrant dans l'espace (1.13) de l'appareil, et des éléments mélangeurs (2.1) formés par exemple sous forme de palettes placées au moins à l'extrémité de l'arbre, et en outre un pignon menant (2.3) et/ou un accouplement (2.2) sont montés entre le moteur d'entraînement (2.4) et l'arbre de mélange (2.5).

4. Appareil selon la revendication 1, caractérisé en ce que l'ensemble de lavage (3) comporte un arbre de lavage (3.3) entraîné par un pignon rotatif (3.1) et pénétrant dans l'espace interne (1.13) de l'appareil et au moins une tuyauterie de pulvérisation (3.4) disposée à l'extrémité de l'arbre.

5. Appareil selon la revendication 1, caractérisé en ce que la bride de raccordement (4.2) est formée à la partie supérieure de la pièce de dérivation (4.6) afin qu'elle soit fixée à la tuyauterie à passage direct d'évacuation (1.4) de la cuvette (1.12).

6. Appareil selon la revendication 1, caractérisé en ce que l'extrémité supérieure de la pièce de raccordement (4.5) a des dispositifs placés dans l'espace de l'appareil, par exemple une partie femelle (4.1) de raccordement rapide qui permet un raccordement direct par exemple de l'ensemble de filtration (6).

7. Appareil selon l'une des revendications 5 et 6, caractérisé en ce que l'ensemble combiné (4) de fixation est complété par un ou plusieurs prolongements (5) de réglage de niveau convenant à l'extraction d'un matériau de zones de diverses hauteurs dans l'espace interne (1.13) de l'appareil.

8. Appareil selon la revendication 7, caractérisé en ce que le prolongement (5) de réglage de niveau comporte un tube (5.1) de réglage de niveau et un dispositif (5.2) de raccordement rapide placé à l'extrémité inférieure du tube (5.1) de réglage de niveau et coopérant avec la partie femelle (4.1) de raccordement rapide de la pièce (4.5) de raccordement.

9. Appareil selon la revendication 1, caractérisé en ce que le sac de filtration (6.2) est formé par une plaque plate incorporée à un châssis tubulaire (6.1) qui a de préférence un réseau très tassé de canaux espacés (6.9) sur les deux faces, les canaux débouchant dans le châssis tubulaire (6.10), alors que le sac de filtration (6.2) est recouvert d'une étoffe interchangeable de filtration (6.8) correspondant à la nature du matériau à filtrer.

10. Appareil selon la revendication 1, caractérisé en ce que la partie inférieure de chaque sac de filtration (6.2) a un prolongement de raccordement (6.6) et la tuyauterie collectrice (6.3) a des logements (6.7) destinés à contenir les prolongements de raccordement (6.6).

11. Appareil selon la revendication 10, caractérisé en ce qu'un ou plusieurs sacs de filtration (6.2) sont supprimés, et les logements (6.7) sont fermés par des bouchons (6.11) remplaçant le prolongement de raccordement (6.6), à la place des sacs manquants de filtration (6.2).

12. Appareil selon l'une des revendications 10 et 11, caractérisé en ce que la tuyauterie collectrice (6.3) a des dispositifs (6.4) de raccordement rapide destinés à permettre une purge et raccordés à la partie femelle (4.1) de raccordement rapide de l'ensemble combiné (4) de fixation.

13. Appareil selon l'une quelconque des revendications 10 à 12, caractérisé en ce que les pièces de support (6.5) sont placées à l'extérieur du panier de filtration (6.1) et sont au contact de la paroi interne de la cuvette (1.12) par coopération par friction.

14. Appareil selon la revendication 11, caractérisé en ce que l'ensemble de séparation de phases (4.5) est assemblé à partir de l'ensemble combiné (4) de fixation et du prolongement (5) de réglage de niveau.

15. Appareil selon la revendication 1, caractérisé en ce que l'appareil (1245) d'extraction de solvant est monté à partir de l'appareil (12) de mélange et de l'ensemble (45) de séparation de phases.

16. Appareil selon la revendication 1, caractérisé en ce qu'un appareil (145) de séparation d'émulsion est monté à partir de l'appareil fondamental (1) et d'un ensemble de séparation de phases (45).

17. Appareil selon la revendication 1, caractérisé en ce qu'un appareil de lavage de gaz (134) est monté à partir de l'appareil fondamental (1), de l'ensemble de lavage (3) et de l'ensemble combiné (4) de fixation.

18. Appareil selon la revendication 1, caractérisé en ce qu'un appareil de lavage et de filtration (1346) est monté à partir de l'appareil fondamental (1), de l'ensemble de lavage (3), de l'ensemble combiné (4) de fixation et de l'ensemble de filtration (6).

19. Appareil selon la revendication 18, caractérisé en ce que des appareils formant filtre à gaz, filtre épurateur, filtre d'un gâteau, sécheur ou adsorbeur sont montés à partir de l'appareil fondamental (1), de l'ensemble de lavage (3), de l'ensemble combiné (4) de fixation et de l'ensemble de filtration (6) ayant dans des cas déterminés un bouchon (6.1) à la place d'un ou plusieurs sacs de filtration (6.2).

Fig. 1

Fig. 2

Fig. 3

Fig. 4

0 055 757

Fig. 5

Fig. 6

Fig. 7

2

Fig. 8

Fig. 9

4

Fig. 10

0 055 757

Fig. 11

6

Fig. 12

Fig. 13

8

Fig. 14

Fig. 15

Fig.16

Fig. 17